# EUROPEAN PATENT APPLICATION

(11) **EP 1 635 078 A1**
(43) Date of publication of application: **15.03.2006**
(21) Application number: 04746134.8
(22) Date of filing: 18.06.2004
(51) Int. Cl.: F16B 39/12

(54) **LOOSENING PREVENTION STRUCTURE FOR BOLT AND NUT**

(30) Priority: 18.06.2003 JP 2003173753; 09.12.2003 JP 2003410893
(71) Applicant: Japan Mechanical Engineering Co. Ltd., Kitakyushu-si, Fukuoka 800-0064 (JP)
(72) Inventor: URYU, Masayuki, 8220001 (JP)
(74) Representative: Hössle Kudlek & Partner
(86) International application number: PCT/JP2004/008632
(87) International publication number: WO 2004/113744

(57) **Abstract**

Provided is a loosening preventive structure for a bolt and nut, comprising a bolt, a nut member to be threadably engaged with the bolt and a lock nut. Said nut member has a lock nut engaging section made in a tapering shape extending axially toward one end thereof. The lock nut engaging section includes a male thread defined in an exterior circumferential wall in the identical or the inverse threading direction relative to a female thread defined in the interior circumferential wall and also includes a slit extending axially toward the one end thereof.

## Description

### FIELD OF THE INVENTION

0001 The present invention relates to a loosening preventive structure for a bolt and nut and more particularly to a loosening preventive structure capable of working effectively to provide for prevention against the loosening of a nut that has been once screwed on a bolt.

### DESCRIPTION OF THE PRIOR ART

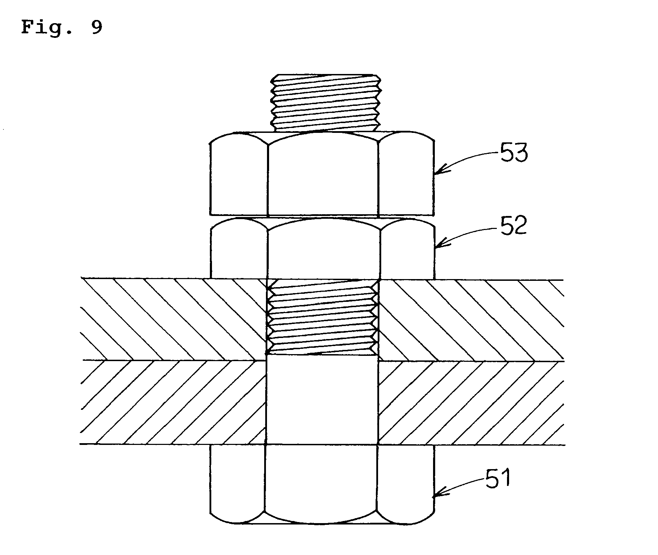

0002 There has been provided according to a prior art a loosening preventive structure for preventing the loosening of a nut that has been screwed on a bolt, including such a loosening preventive structure by employing a double nut system as shown in Fig. 9. In the loosening preventive structure for a bolt and nut by means of the double nut system, a nut 52 is threadably engaged with a bolt 51 with members to be fastened disposed therebetween. Further in this structure, a lock nut 53 which is greater in height than the nut 52 is threadably engaged with the bolt 51 over the nut 52. The lock nut 53 serves to tighten the underlying nut 52 rigidly from above. Thus, advantageously the loosening preventive structure with the double nut system can workmore effectively over other typical bolt and nut structure to prevent the loosening.

### SUMMERY OF THE INVENTION

### Problem to be solved by the invention

0003 However, the loosening preventive structure for a bolt and nut using the double nut system has been suffering from the following problems. Specifically, the direction for the lower nut to be threadably engaged with the bolt is identical with the direction for the lock nut serving for tightening over the lower nut to be threadably engaged with the bolt. As a result, if any vibrations or impact applied to the structure in a specific direction, the upper and the lower nuts tend to loosen simultaneously toward the specific direction.

0004 An object of the present invention is to provide a loosening preventive structure for a bolt and nut, which is endurable against vibrations or impact. Another object of the present invention is to provide a loosening preventive structure for a bolt and nut, which can reliably provide for prevention against the possible loosening by using an existing bolt.

### Means to solve the problem

0005 According to the invention as defined in claim 1, provided is a loosening preventive structure for a bolt and nut, comprising a bolt, a nut member to be threadably engaged with said bolt by an female thread defined in an interior circumferential wall and a lock nut for locking said nut member on said bolt, in which said nut member has a lock nut engaging section made in a tapering or linear shape extending axially toward one end thereof, said lock nut engaging section having an male thread defined in an exterior circumferential wall in an identical or an inverse threading direction relative to the female thread defined in the interior circumferential wall and also including a slit extending axially toward the one end thereof, wherein said lock nut is threadably engaged with said male thread so as to lock said nut member on said bolt.

The nut member is generally cylindrical in configuration with the female thread that has been threaded in the interior circumferential wall of an axial bore having a circular cross section. Further, the nut member has a spanner engaging section at the other end thereof along its axial direction as well as the lock nut engaging section in a tapering or linear shape extending axially from the spanner engaging section toward the one end of the nut member. The tapering shape implies that the lock nut engaging section exhibits a truncated cone configuration as a whole defined with its outer diameter reducing continuously from the other end toward the one end thereof. In contrast, the linear shape implies that the outer diameter of the lock nut engaging section is constant along the axial line. It is to be noted that the length of the lock nut engaging section measured along the axial direction is not limited.

The lock nut engaging section further includes the slit extending axially from the one end toward the other end thereof. At least one slit should be provided. Alternatively, a pair of slits may be formed in a symmetric orientation. This may facilitate an elastic deformation of the lock nut engaging section.

The lock nut engaging section further includes the male thread defined in the exterior circumferential wall of the nut member in the identical or inverse threading direction relative to the internally threaded female thread.

The spanner engaging section is disposed at the other end of the nut member in its axial direction, which serves to tighten the nut member on the bolt. The configuration of the spanner engaging section may be a polygonal shape such as a hexagon or a circular shape. It is to be noted that preferably the width of the spanner engaging section should be as wide as possible.

A member to be fastened is interposed between the bolt and the nut. A single member or a plurality of members to be fastened may be herein applied. It is also noted that the bolt may include a stud bolt. The shape of a head portion of the bolt and/or the lock nut may be polygonal or circular. Further, the material, size and shape of each of the bolt, nut member and lock nut are not limited, respectively. For example, the material for those components may employ SS400.

0006 In the loosening preventive structure for a bolt and nut as defined in claim 1, firstly the bolt is rotated in one direction into the threadably engagement with the nut member. At that time, the bolt may be previously inserted through the member(s) to be fastened. Secondly, the lock nut is threadably engaged with the lock nut engaging section of the nut member in the identical or inverse rotational direction relative to the rotational direction of the bolt. By this way, the bolt is screwed in the nut member and the nut member is in turn tightened on the bolt with the aid of the lock nut.
The lock nut engaging section is formed in the tapering or linear shape extending axially toward the one end of the nut member. Additionally, the slit is formed in the lock nut engaging section. The lock nut is tightened over the nut member that has been threadably engaged with the bolt. Upon this operation, the nut member is elastically deformed as top ends of the slit approach to each other. This helps enhance the tight contact between the exterior circumferential wall of the lock nut engaging section and the interior circumferential surface of the lock nut. This tight contact condition can further enhance the fastening between the bolt and the nut member to be more rigid. Consequently, the bolt is fastened rigidly in the nut member and at the same time the lock nut is rigidly tighten on the nut member.
Especially, if such a male thread is formed in the exterior circumferential wall of the lock nut engaging section, that is threaded in the direction opposite to the female thread, the nut member and the lock nut would have been screwed down over the bolt in the opposite directions from each other. If any vibrations or impacts are applied to the fastening structure, the nut member inherently tends to loosen. Upon this reaction, the lock nut tends to tighten the nut member. As a result, the preventive action against the loosening of the nut member relative to the bolt takes effect.

0007 According to the invention as defined in claim 2, said male thread defined in the exterior circumferential wall in said lock nut engaging section of said nut member is a fine thread. The fine thread is characterized in a small pitch between threads as compared to a coarse thread. The smaller pitch can provide a larger contact area of the exterior circumferential wall of the nut member with the interior circumferential wall of the lock nut. Therefore, the fine thread more hardly loosens than the coarse thread. The fine thread can be applied to such a site that tends to be exposed to a greater magnitude of vibration or impact, for example.

0008 In a loosening preventive structure for a bolt and nut as defined in claim 2, said male thread defined in the exterior circumferential wall in said lock nut engaging section of said nut member is a fine thread. The fine thread is characterized in a small pitch between threads as compared to the coarse thread. The smaller pitch can provide a larger contact area of the exterior circumferential wall of the nut member with the interior circumferential wall of the lock nut. Therefore, the fine thread more hardly loosens than the coarse thread. The fine thread can be applied to such a site that tends to be exposed to a greater magnitude of vibration or impact, for example.

### Effect of the invention

0009 According to the present invention, the bolt is rotated in one direction into an engagement with the nut member. Subsequently, the lock nut is threadably engaged with the lock nut engaging section of the nut member via the rotations in the direction identical or inverse to the rotational direction of the bolt. By this way, the bolt is screwed in the nut member and the nut member is in turn tightened on the bolt with the aid of the lock nut.
The lock nut engaging section is formed in the tapering or linear shape extending toward the one end of the nut member along its axial direction. Additionally, the slit is formed in the lock nut engaging section. When the lock nut is tighten on the nut member that has been threadably engaged with the bolt, the nut member is deformed as top ends of the slit approach to each other. This helps enhance the tight contact (i.e., increase the frictional force) between the exterior circumferential wall of the lock nut engaging section and the interior circumferential wall of the lock nut. This tight contact condition can further enhance the fastening relationship between the bolt and the nut member to be more rigid. Consequently, the bolt is fastened rigidly in the nut member and at the same time the lock nut is rigidly tightened on the nut member.
The loosening preventive structure for a bolt and nut as discussed above is applicable to such a site in association with vibrations and impact, for example, to an internal combustion engine and a railroad. The loosening preventive structure for a bolt and nut of the present invention is further applicable to an existing type of bolt such as a stud bolt. The present invention further allows the nut member to be fastened on the bolt in any intermediate location along the bolt by tightening the lock nut on the nut member.

### BRIEF DESCRIPTION OF THE DRAWINGS

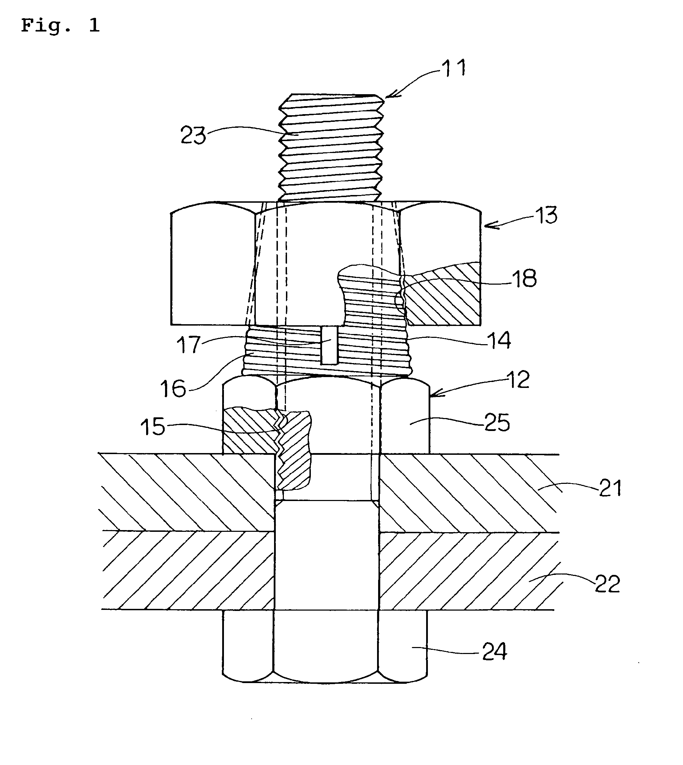

0010 Fig. 1 is a partially cutaway front view showing a loosening preventive structure for a bolt and nut according to a first embodiment of the present invention;
Fig. 2 is an exploded view showing a loosening preventive structure for a bolt and nut according to the first embodiment of the present invention;
Fig. 3 is another exploded view of a loosening preventive structure for a bolt and nut according to the first embodiment of the present invention;
Fig. 4 is a sectional view of test equipment for conducting a test on a loosening preventive structure for a bolt and nut according to the first embodiment of the present invention;
Fig. 5 is a front view showing a stud bolt to which a loosening preventive structure for a bolt and nut according to the first embodiment of the present invention is applied;
Fig. 6 is a front view of a loosening preventive structure for a bolt and nut according to the first embodiment of the present invention, illustrating an engagement thereof in an intermediate location along the bolt;
Fig. 7 is a front view of a loosening preventive structure for a bolt and nut according to the first embodiment of the present invention, illustrating a condition for securing a pipe;
Fig. 8 is a partially cutaway front view showing a loosening preventive structure for a bolt and nut according to a second embodiment of the present invention; and
Fig.9 is a front view showing a loosening preventive structure for a bolt and nut according to the prior art.

### Description of reference numerals

0011
- 11: Bolt,
- 12: Nut member,
- 13: Lock nut,
- 14: Lock nut engaging section,
- 15: Interior circumferential wall of the nut member
- 16: Exterior circumferential wall of the nut member (lock nut engaging section),
- 17: Slit

### DESCRIPTION OF THE PREFERRED EMBODIMENTS

0012 Preferred embodiments of the present invention will nowbe described with reference to the attached drawings.

### Embodiment 1

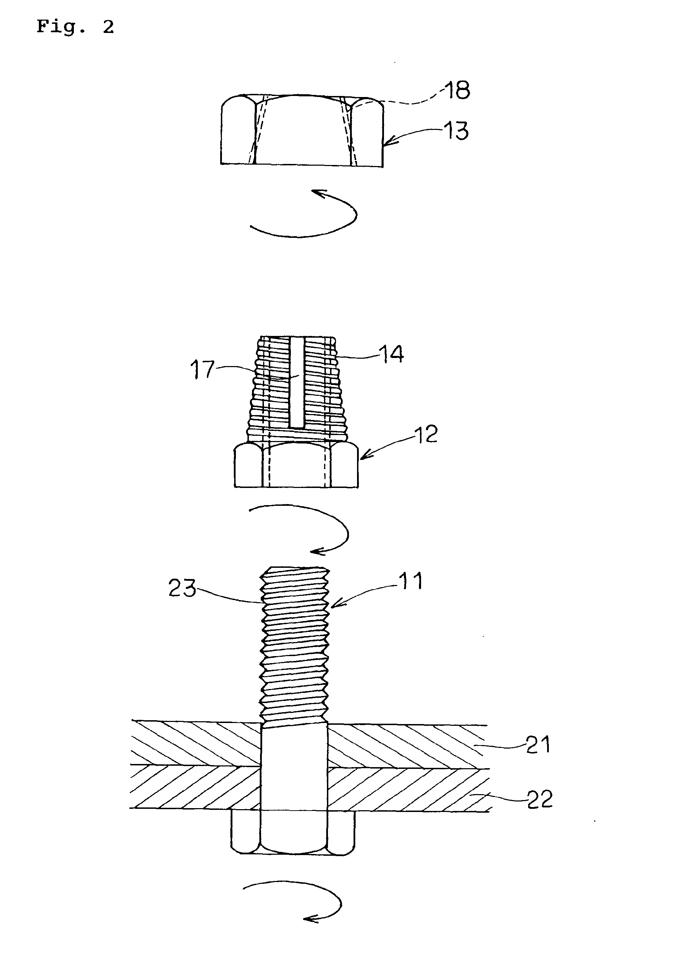

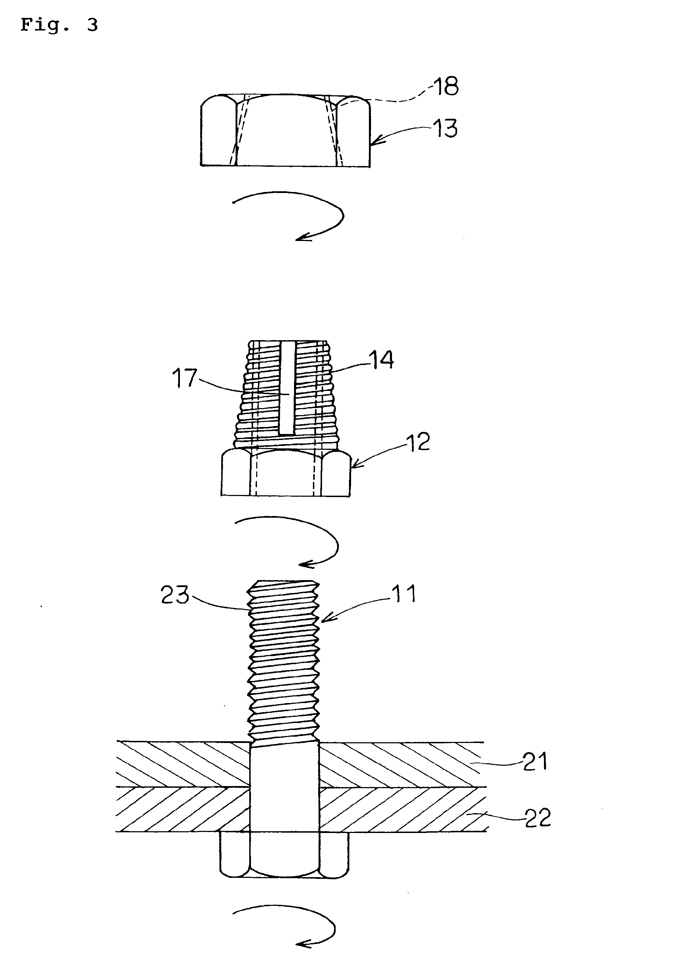

0013 A first embodiment of the present invention will now be described with reference to Figs. 1 to 7.
A loosening preventive structure for a bolt and nut according to the illustrated embodiment comprises, in its configuration as shown in Fig. 1, a bolt 11 and a nut member 12 serving to fasten a stack of (horizontal) members to be fastened 21 and 22 which are placed vertically one on the other, and a lock nut 13 serving to lock (rigidly secure) the nut member 12.
The bolt 11 employs a general-purpose bolt. The bolt 11 has a hexagonal head portion 24 and a shaft portion 23 integrally formed with the head portion 24 and having a certain length of thread portion (a coarse thread) threaded in a top end side of the bolt.
The nut member 12 is, as it is shown in Fig. 1, provided with a hexagonal spanner engaging section 25 in a lower portion (the axially other end) thereof and a lock nut engaging section 14 in an upper portion (axially one end) thereof, two of which are continuously arranged. A female thread (a coarse thread) for threadable engagement with a male thread of the bolt 11 is defined in an interior circumferential wall 15 of the nut member 12. The lock nut engaging section 14 defined in the one end portion of the nut member 12 along its axial direction is tapering toward the one end. A pair of slits 17 is formed in the lock nut engaging section 14, which is extending axially from the one end toward the other end of the nut member 12. Each of the pair of slits 17 is spaced from each other by a half-circle (180 degrees) in a parallel relationship. It is to be noted that the length and the width of the slit 17 may be determined without any restriction.
In an embodiment shown in Fig. 2, the nut member 12 has the male thread (a fine thread) in an exterior circumferential wall 16 of the lock nut engaging section 14, which is threaded in the inverse direction relative to the thread in the interior circumferential wall 15.
Further, as shown in Fig. 3, the nut member 12 may have the male thread that is threaded in the identical direction as in the interior circumferential wall 15. This male thread is a fine thread specified by a smaller thread pitch than the thread in the interior circumferential wall 15.
It is to be noted in the lock nut engaging section 14 that a coarse thread may be formed in the exterior circumferential wall.
The male thread in the exterior circumferential wall 16 of the lock nut engaging section 14 is threadably engaged with a lock nut 13. This lock nut 13 comprises a hexagonal nut having a larger outer diameter than the nut member 12. A female thread is formed in an interior circumferential wall 18 of the lock nut 13 for a threadable engagement with the male thread of the nut member 12. The female thread also employs a fine thread similar to the male thread in said lock nut engaging section 14. Further, the interior circumferential wall 18 of the lock nut 13 is tapering axially toward one end thereof. Specifically, the female thread of the lock nut 13 is defined along the tapering surface.
Further, if the axial thickness of the lock nut 13 (i.e., the width of a spanner engaging section) is made greater, then a contact area between the exterior circumferential wall 16 of the lock nut engaging section 14 in the nut member 12 and the interior circumferential wall 18 of the lock nut 13 can be larger. Therefore, the loosening preventive effect from the loosening preventive structure for a bolt and nut can be enhanced.
It is needless to say that the material, dimension (thickness, length and width) of each of the bolt 11, the nut member 12 and the lock nut 13 are not limited but can be appropriately specified. They may be determined in dependence on the specific site in application. 0014 Using those components as described above, a tightening method of the loosening preventive structure for a bolt and nut will now be described.
As shown in Figs. 2 and 3, in the loosening preventive structure for a bolt and nut, firstly the bolt 11 is inserted from one direction into respective mounting openings of a stack of horizontal members to be fastened (steel plates having predetermined thickness respectively) 21 and 22 which are placed vertically one on the other. In this operation, the shaft portion 23 of the bolt 11 is inserted through respective mounting openings of the members to be fastened 21 and 22 with a predetermined length of the shaft portion 23 in the top end thereof protruding over the mounting opening. Subsequently, the nut member 12 is screwed down in one direction over the top end of the shaft 23 of the bolt 11, which operation is performed from the other direction with respect to the stack of members to be fastened 21 and 22. Then, the lock nut 13 is threadably engaged with the lock nut engaging section 14 of the nut member 12.
When the lock nut 13 is tightened, the lock nut engaging section 14 of the nut member 12 is clamped toward an axial center of the nut member 12. In this case, the lock nut engaging section 14 is made in the tapering configuration toward the one end in its axial direction and additionally provided with a pair of slits 17. Tightening effected by the lock nut 13, with the aid of the slits 17, induces a deformation in the lock nut engaging section 17 that assumes the tapering configuration toward the one end in its axial direction. This can enhance the tight contact between the exterior circumferential wall of the lock nut engaging section 14 and the interior circumferential wall of the lock nut 13. Consequently, this can also enhance the tight contact between the interior circumferential wall (female thread) of the lock nut engaging section 14 and the male thread of the bolt 11. Thus achieved tight contact can make the fastening between the bolt 11 and the nut member 12 more rigid. As a result, the bolt 11 can be fastened rigidly against the nut member 12 and the lock nut 13 can be tightened rigidly on the nut member 12.
If the male thread is defined in the exterior circumferential wall 16 of the lock nut engaging section 14 in the inverse threading direction relative to the female thread defined in the interior circumferential wall 15 of the lock nut engaging section 14 as shown in Fig. 2, the nut member 12 and the lock nut 13 are screwed down independently in the opposite directions to each other with respect to the bolt 11. If any vibrations or impacts applied to this fastening structure, the nut member 12 tends to loosen. In response to this trend, the lock nut 13 causes the tightening action to take effect on the nut member 12. AS a result, this provides the prevention against the loosening of the nut member 12 from the bolt 11. That is, this structure can achieve the more enhanced effect of prevention against the loosening trend.
Furthermore, advantageously the exterior circumferential wall of the lock nut engaging section 14 has employed the fine thread. Owing to this, a contact area per unit length between the exterior circumferential wall 16 of the lock nut engaging section 14 and the interior circumferential wall 18 of the lock nut 13 can be enlarged even in the comparison to the coarse thread. Therefore, the prevention against the loosening between the bolt and the nut can be enhanced more effectively.

0015 Referring now to Fig. 14, a vibration test on a loosening preventive structure for a bolt and nut of the present invention will be described.

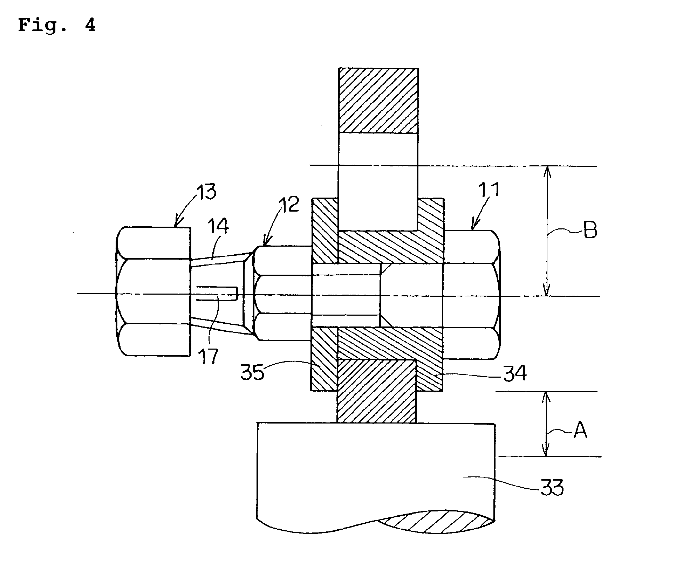

Fig. 4 shows a commonly used type of test equipment (the NAS type high-speed thread loosening test unit) capable of conducting the vibration test on a fastening structure of a bolt and nut. This loosening test equipment includes an oscillating table 33 for applying vibrations to a subject to be excited. The oscillating table 33 may vibrate the subject to be excited vertically or horizontally. Further, a cylindrical oscillation barrel 34 is disposed on the oscillating table 33 for securely holding the subject to be excited.
The bolt 11 is inserted from one direction into the oscillation barrel 34. In the other direction with respect to the oscillation barrel 34, the nut member 12 (configuration: M12) is threadably engaged with the top end of the shaft portion of the bolt 11 with a jig washer 35 placed between the nut member 12 and the oscillation barrel 34. Further, the lock nut 13 is threadably engaged with the lock nut engaging section 14 of the nut member 12.
A vibration test was conducted on the loosening structure constructed with those components by the loosening test equipment. Respective conditions for the vibration test were defined by a direction of vibration effective in the vertical direction, an oscillation frequency of 1780 rpm, an amplitude of stroke of the oscillating table "A" of 11 mm, and an amplitude of impact stroke "B" of 19 mm. Under those conditions, an experiment was conducted, in which a tightening torque for tightening the bolt 11 against the nut member 12 was varied. Table 1 shows the test results for a case (Case 1) of the male thread defined in the exterior circumferential wall 16 of the lock nut engaging section 14, which has been threaded in the opposite direction to the female thread in the interior circumferential wall 15. Table 2 shows the test results for a case (Case 2) of the male thread that has been threaded in the same direction as the female thread. Table 2 further contains the test result with a commonly used type of nut, including a hexagonal nut, a U-shaped nut and a slotted nut, for reference only.
It is to be noted that the judgment on the test result was made by using aligning makers labeled on the bolt 11, the nut 12 and the jig washer 35. The loosening was determined when the aligning markers were offset to one another to permit the jig washer to be rotated manually as the result of the vibration test. The vibration test was continued for 15 minutes and if no loosening of the jig washer 35 was observed for this 15 minutes, then a returning torque was measured.

0016

**Table 1**

| Test item | Sample No. | Tightening torque | Result | Returning torque N·m | |
|---|---|---|---|---|---|
| | | | | Upper nut | Lower nut |
| Loosening preventive nut M12 | 1 | 20 | Loosened in 2 sec. | - | |
| Loosening preventive nut M12 | 2 | 30 | Loosened in 29 sec. | - | |
| Loosening preventive nut M12 | 3 | 40 | Not loosened for 15 min. | 49.0 | 49.3 |
| Loosening preventive nut M12 | 4 | 50 | Not loosened for 15 min. | 55.8 | 63.8 |
| Loosening preventive nut M12 | 5 | 37 | Loosened in 34 min. | - | |

0017

**Table 2**

| Test item | Sample No. | Tightening torque | | Result | Returning torque N·m | |
|---|---|---|---|---|---|---|
| | | Lowe nut | Upper nut | | Upper nut | Lower nut |
| Hexagonal nut M12 (Plain washer & spring washer) | 1 | 40 | | Loosened in 17 sec. | - | |
| Hexagonal nut M12 (Double nut) | 2 | 40 | 40 | Loosened in 17 sec. | - | - |
| U nut M12 | 3 | 40 | | Loosened in 1 min. and 29 sec. | - | |
| Slotted nut M12 | 4 | 40 | | Loosened in 3 sec. | - | |
| Slotted nut M12 | 5 | 40 | | Loosened in 2 sec. | - | |
| Loosening preventive nut M12 | 6 | 40 | 40 | 12 min. and 34 sec. | - | - |
| Loosening preventive nut M12 | 7 | 50 | 50 | Not loosened for 15 min. | 42.1 | 36.7 |
| Loosening preventive nut M12 | 8 | 60 | 60 | Not loosened for 15 min. | 57.0 | 0.0 |

0018 It has been found in the result from the vibration test for the case 1 that if the tightening torque of the nut member 12 against the bolt 11 is 40 N · m or greater, the jig washer 35 would not loosen even in case of any vibrations or impacts arisen. Any structures satisfying this condition can be evaluated as a loosening preventive structure for a bolt and nut, which is sufficiently acceptable to prevent the loosening.
Further for the case 2, if the tightening torque of the nut member 12 against the bolt 11 is 50 N · m or greater, the jig washer 35 would not loosen even in case of any vibrations or impacts arisen. Any structures satisfying this condition can be evaluated as a loosening preventive structure for a bolt and nut, which is sufficiently acceptable to prevent the loosening. However, the returning torque has been found slightly lower as compared to that for the case 1.
It could be said from the above findings in the test results that the loosening preventive structure for a bolt and nut of the present invention is applicable to a site associated with the vibrations or impacts, such as an internal combustion engine and a railway.

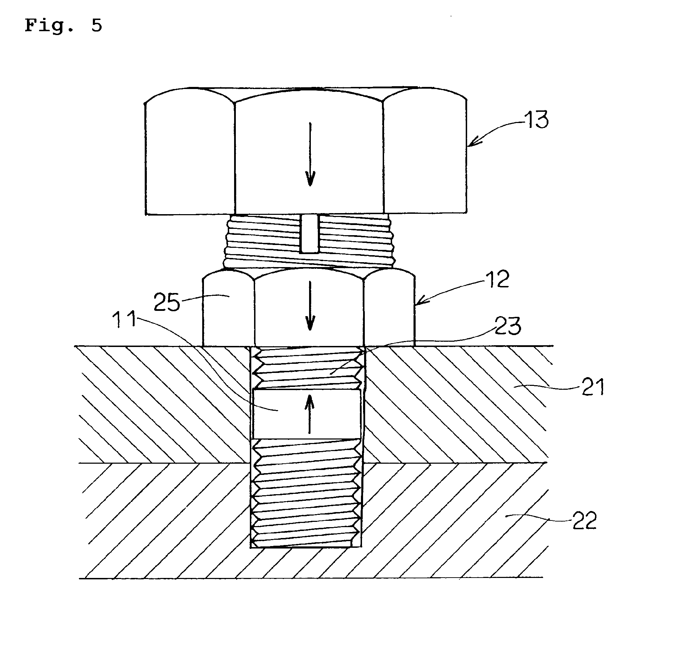

0019 The loosening preventive structure for a bolt and nut of the present invention is also applicable to the following cases.
Firstly shown is an example of an application of the present structure to a stud bolt 11 that has been threadably mounted on the stack of members to be fastened 21 and 22. Specifically, if any rust is generated on the stud bolt 11 in such a condition that the stud bolt 11 is fittingly screwed into the stack of members to be fastened 21 and 22, then the stud bolt 11 can be easily removed by using the nut member 12 and the lock nut 13.
It is assumed firstly that moisture enters into a fitting section of the stud bolt 11 that has been threadably mounted on the stack of members to be fastened 21 and 22 as shown in Fig. 5. If the material used to fabricate the stud bolt 11 is iron or steel and the stud bolt is left in an atmosphere containing any moisture, the rust should be generated in a surface of the stud bolt 11 after a predetermined time period having elapsed. Specifically, an oxide is generated in the surface of the bolt 11. If the oxide is generated in the surface of the stud bolt 11, the threads defined in the stud bolt 11 could be broken or damaged. With any such break or damage in the threads, the stud bolt would have lost its functioning as a thread. Consequently, the removing of the stud bolt 11 threadably mounted on the stack of members to be fastened 21 and 22 is no more feasible.
To give a solution to the above situation, the nut member 12 and the lock nut 13 are fastened to the stud bolt 11 having lost its threading function. Firstly, the nut member 12 is externally fitted on the top end of the shaft portion 23 of the stud bolt 11 and screwed down on the bolt 11 which has been threadably mounted on the stack of members to be fastened 21 and 22. The nut member 12 is screwed down on the bolt 11 until the lower surface of the spanner engaging section 25 of the nut member 12 comes into abutment on the stack of members to be fastened 21 and 22. Then, the lock nut 13 is threadably engaged with the nut member 12. As the lock nut 13 is tightened, the nut member 12 comes into a hard abutment against the stack of members to be fastened 21 and 22 so that an external force can be effectively transmitted to the stud bolt 11. This allows the removal of the stud bolt 11 threadably mounted on the stack of members to be fastened 21 and 22, as it is in the rusty condition.

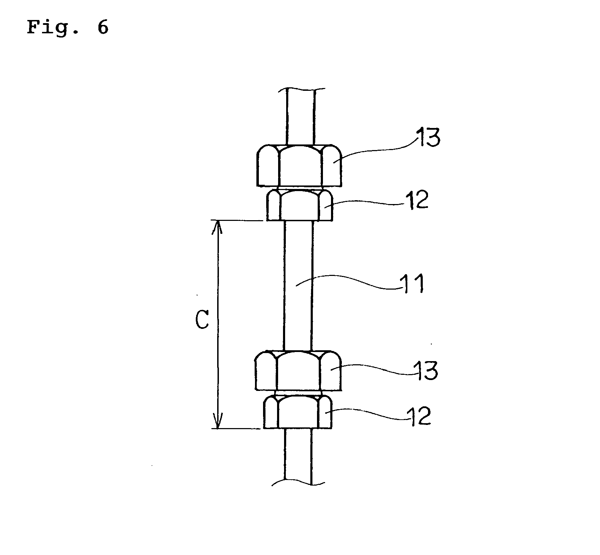

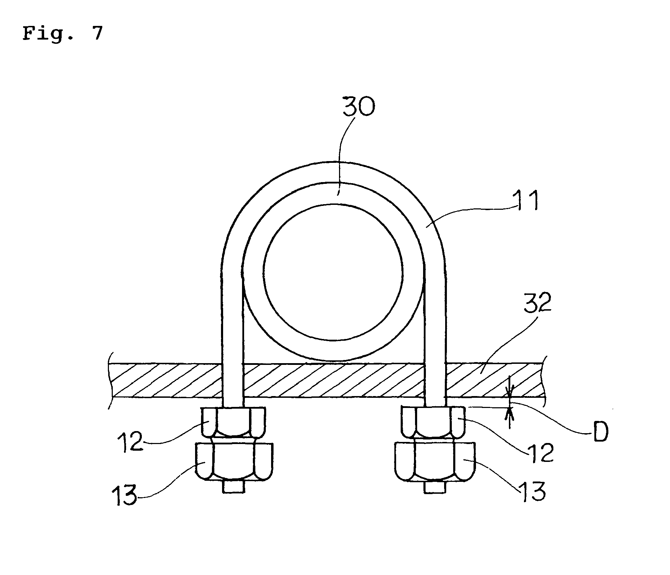

0020 The loosening preventive structure for a bolt and nut of the present invention has a slit in the lock nut engaging section as described above. This arrangement help enhance the tight contact between the exterior circumferential wall of the lock nut engaging section 14 and the interior circumferential wall of the lock nut 13 when the lock nut 13 is tightened over the nut member 12. This enhanced tight contact makes the fastening between the bolt 11 and the nut member 12 more rigid. Accordingly, the structure of the present invention further allows the nut member 12 to be fastened on the bolt 11 in an intermediate location along the bolt 11 by tightening the lock nut 13 over the nut member 12. For example, as shown in Fig. 6, it is also possible for two sets of the nut member 12 and lock nut 13 to be secured to the long bolt 11 at two locations spaced by a predetermined distance therebetween (C segment).
Further, occasionally a pipe 30 is to be secured to a member by using a U-shaped bolt 11. In a specific case of a gas pipe 30, it tends to expand and contract in dependence on a temperature variation. A fear will arise in conjunction with this property of the gas pipe 30 that if the pipe 30 is fastened with a typical type of nut, the pipe 30 may expand, which leads to a damage in the pipe 30 in itself. There is another fear in an opposite case where the pipe 30 contracts that the typical type of nut tends to loosen and consequently escape from the bolt 11.
To address this, the U-shaped bolt 11 is engaged with the pipe 30 with two legs of the U-shaped bolt 11 protruding over a fixing member 32, as shown in Fig. 7. The two legs of the bolt 11 include the threads defined in the top ends thereof, respectively. The nut member 12 is threadably mounted on each of the threaded sections. Further, the lock nut 13 is tightened over the nut member 12. In this step of operation, the nut member 12 and the lock nut 13 are locked in a position spaced from the fixing member 32 by a predetermined distance (D segment). This arrangement can prevent the pipe 30 from being broken even if the pipe 30 expands due to the temperature variation. Further, even if the pipe 30 contracts, the nut member 12 with the lock nut 13 are inhibited from being escaped from the bolt 11.

### Embodiment 2

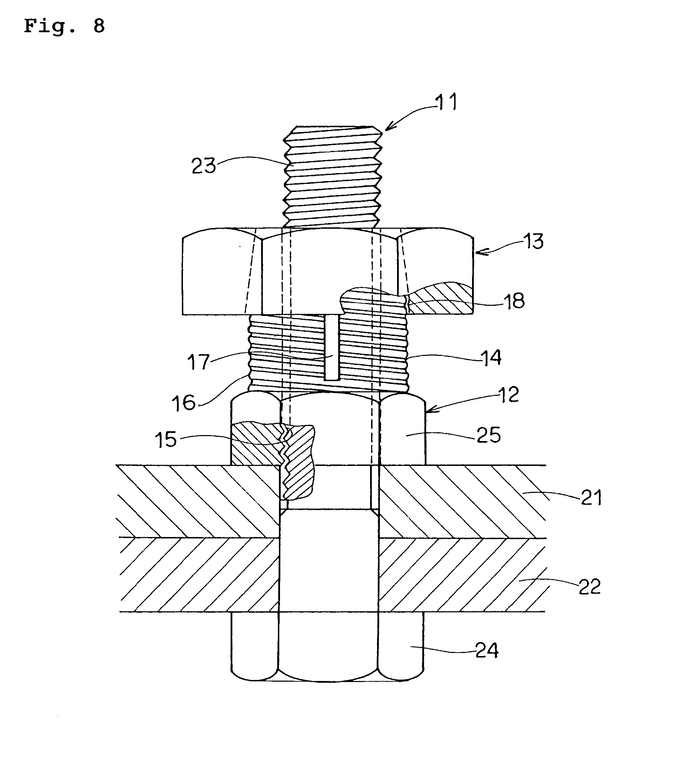

A second embodiment of the present invention will now be described with reference to Fig. 8.
A loosening preventive structure for a bolt and nut according to the second embodiment defines a loosening preventive structure for a bolt and nut according to the first embodiment that has been further modified as described below. Specifically, the modification resides in that the lock nut engaging section 14 is formed to be linear toward one end along its axial direction. The term, "to be linear", refers that the section has a constant thickness along the axial direction or defines a cylindrical configuration. On the other hand, the interior circumferential wall of the lock nut 13 defines a tapering female thread portion. Other parts of configuration of the structure of the second embodiment are identical with those in the first embodiment.
The lock nut 13 is tightened over the lock nut engaging section 14 of the nut member 12. As it is, the tightening force is exerted on the lock nut engaging section 14 from one end side thereof, and the slit is deformed with its top ends approach to each other. In this embodiment, the strong tightening takes effect from the one end side of the nut member 12 as compared to the nut member 12 having the lock nut engaging section 14 defining the tapering top end in the first embodiment. This allows the nut member 12 of the second embodiment to be tightened more quickly and rigidly than the nut member 12 of the first embodiment as described above. Owing to its feature that provides the strong tightening in the one end side, the lock nut 13 of the second embodiment may have approximately one half of the length in its vertical direction as compared to the lock nut 13 in the first embodiment.

## Claims

1. A loosening preventive structure for a bolt and nut, comprising a bolt, a nut member to be threadably engaged with said bolt by a female thread defined in an interior circumferential wall and a lock nut for locking said nut member on said bolt, in which
said nut member has a lock nut engaging section made in a tapering or linear shape extending axially toward one end thereof,
said lock nut engaging section having a male thread defined in an exterior circumferential wall thereof in an identical or an inverse threading direction relative to said female thread defined in said interior circumferential wall and also including a slit extending axially toward the one end thereof, wherein
said lock nut is threadably engaged with said male thread so as to lock said nut member on said bolt.

2. A loosening preventive structure for a bolt and nut in accordance with claim 1, in which
said female thread defined in said interior circumferential wall in said lock nut engaging section is a coarse thread and said male thread defined in said exterior circumferential wall in said lock nut engaging section is a fine thread.
